# EUROPEAN PATENT SPECIFICATION

(11) **EP 2 568 203 B1**
(45) Date of publication and mention of the grant of the patent: **10.06.2020**
(21) Application number: 11777506.4
(22) Date of filing: 07.04.2011
(51) Int. Cl.: F16K 17/04, B05B 1/32, B05B 1/30, A01G 25/02

(54) **AUTO-SWITCHING SPRAYING APPARATUS**
SELBSTUMSCHALTENDE SPRÜHVORRICHTUNG
APPAREIL DE PULVÉRISATION À COMMUTATION AUTOMATIQUE

(30) Priority: 04.05.2010 KR 20100041700
(43) Date of publication of application: 13.03.2013
(73) Proprietor: Kyung Nong Corporation, Seoul 137-070 (KR)
(72) Inventor: LEE, Yong-Min, Gyeonggi-do 429-120 (KR)
(74) Representative: Isern Patentes y Marcas S.L.
(86) International application number: PCT/KR2011/002434
(87) International publication number: WO 2011/139025

(56) References cited:
- EP-A1- 0 433 143
- EP-A2- 0 230 150
- WO-A1-02/102461
- FR-A5- 2 184 247
- JP-A- 55 061 952
- JP-A- 2004 097 906
- JP-A- 2004 298 778
- JP-U- H01 108 353
- KR-Y1- 200 417 105
- US-A- 2 639 194

## Description

### [Technical Field]

The present invention relates to a spraying apparatus, and more particularly, to a spraying apparatus which, like a sprinkler, periodically sprays water (including diluted chemicals) via a nozzle in irrigation facilities for crops.

### [Background Art]

A conventional spraying apparatus has a problem in that even after a water supply is interrupted, the water is still sprayed for some time or a small amount may leak from a nozzle due to water-pressure and the inertia of water in a water supply pipe. For example, EP 0 433 143 A1 discloses an apparatus for spraying liquids comprising a body having an inlet passage which is connectable to a supply duct; a chamber provided in the body and communicating with the entrance passage; an outlet passage communicating with the chamber; a bearing surface surrounding the body portion which contains the chamber and into which the outlet passage opens; and a nozzle holder part rotatably mounted on the bearing surface, carrying at least two nozzles and having orifices arranged for communicating a determined nozzle with said outlet passage for a suitable position of said part nozzle holder. However, it is not equipped with any means to shut the pathway(s) when the supply of water is halted.

Thus, in addition to water loss, it is difficult to control a constant supply of water to the crops. Moreover, if water leakage continues for a long time, it results in an oversupply of water, which may induce unexpected damages to the crops.

### [Disclosure]

### [Technical Problem]

Accordingly, the present invention has been made keeping in mind the above problems occurring in the related art, and is intended to provide an auto-switching spraying apparatus in which a flow passage for a nozzle is automatically opened when water is supplied and automatically closed when the supply of water is halted.

### [Technical Solution]

In an aspect, the present invention provides an auto-switching spraying apparatus. The auto-switching spraying apparatus of the present invention includes: a pipe body including at least one nozzle branch pipe and a backflow pipe for reversing the flow of water flowing through an upper opening into a branch area and supplying the water to the nozzle branch pipe; a pad disposed at the lower portion of the branch area; and a biasing unit elastically supported by a spring from a pipe body cap, between the pad and the pipe body cap coupled to a lower opening of the pipe body to bias the pad toward the upper opening. Preferably, a lower end portion of the backflow pipe may have a rounded shape.

According to the feature of the present invention, the pad and the biasing unit fall down toward the lower opening due to hydraulic pressure (or water pressure), so that the flow passage for a nozzle branch pipe is opened.

The biasing unit may have a positioning pin around which the spring is inserted, the positioning pin being inserted into a through-hole of the pipe body cap.

The auto-switching spraying apparatus may include a nozzle cap coupled to a leading end of the nozzle branch pipe, the nozzle cap having an injection port. The nozzle cap may be provided on its inner surface with a groove extending to the injection port, the groove having a certain curvature allowing for changing the direction of water supplied. Further, a turnabout may be provided between the nozzle cap and the nozzle branch pipe. The turnabout changes the direction of water supplied perpendicular to the nozzle branch pipe.

### [Advantageous Effects]

According to the spraying apparatus of the present invention, a flow passage for the nozzle is automatically opened when water is supplied and closed when the supply of water is halted. Therefore, water leakage is prevented after the supply of water is halted.

### [Description of Drawings]

FIG. 1 is a perspective view showing an auto-switching spraying apparatus according to the present invention;
FIG. 2 is a plan view of the auto-switching spraying apparatus shown in FIG. 1;
FIG. 3 is a side view of the auto-switching spraying apparatus shown in FIG. 1;
FIG. 4 is an exploded perspective view showing the major parts of the auto-switching spraying apparatus shown in FIG. 1;
FIG. 5 is a cross-sectional view taken along line A-A in FIG. 3;
FIG. 6 is a cross-sectional view taken along line B-B' in FIG. 5;
FIG. 7 is a view showing the initial state of the auto-switching spraying apparatus according to the present invention; and
FIG. 8 is a view showing the state of the auto-switching spraying apparatus according to the present invention being operated.

### [Mode for Invention]

Detailed features and advantages of the present invention will be apparent from the following detailed description based on the accompanying drawings. Prior to describing the present invention, it is to be noted that, when the functions of conventional elements and the detailed description of elements related with the present invention may make the gist of the present invention unclear, a detailed description of those elements will be omitted. Further, among the terms used herein, the directional terms, e.g. "upper", "lower", or the like, are merely set with reference to the drawings. Therefore, the directional terms used herein should be construed properly according to the actual installation type of the auto-switching spraying apparatus of the invention.

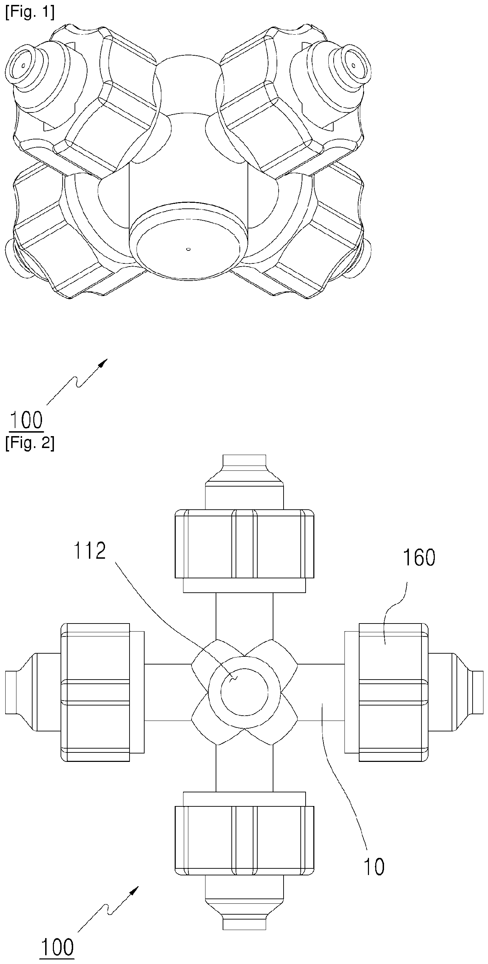

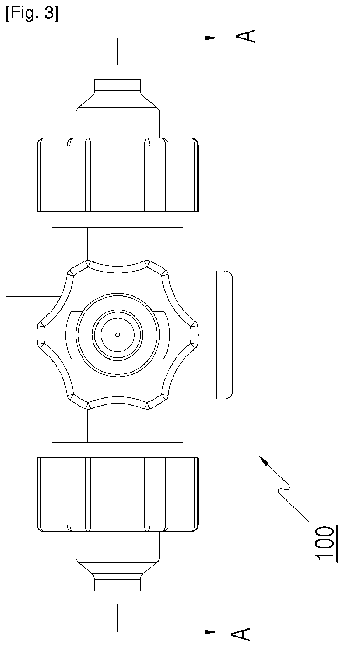

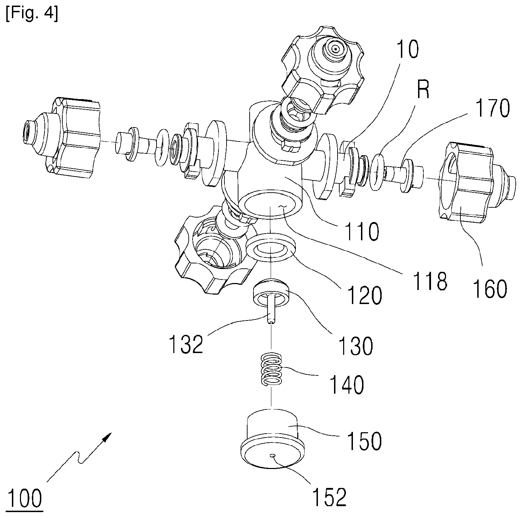

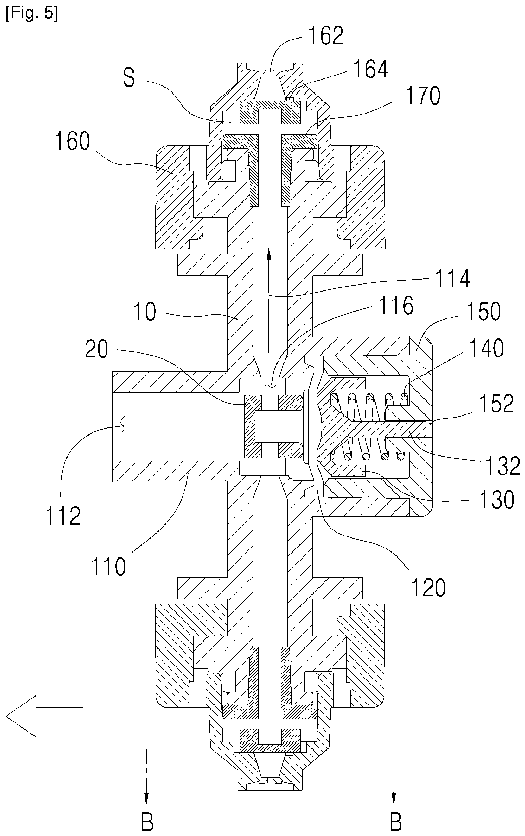

FIGS. 1 to 3 are a perspective view, a plan view, and a side view of an auto-switching spraying apparatus (referred hereinafter to as a "spraying apparatus") 100. FIG. 4 is an exploded perspective view showing the major parts of the spraying apparatus 100 shown in FIG. 1. FIG. 5 is a cross-sectional view taken along line A-A in FIG. 3. An arrow denoted in FIG. 5 indicates the upward direction in the spraying apparatus having been mounted.

The spraying apparatus 100 includes a pipe body 110 with a nozzle branch pipe 10. The nozzle branch pipe 10 extends perpendicularly to the pipe body 110. While it has been illustrated that four nozzle branch pipes are disposed radially so as to extend perpendicular to the pipe body 110, the number of the nozzle branch pipes 10 is not limited as illustrated. The basic technical feature of the present invention, i.e. an "auto-switching function" to be described below in detail, can be fundamentally applied to one or more nozzle branch pipes 10.

Referring again to FIG. 5, water is supplied through an upper opening 112 of the pipe body 110 from a water-supply means, e.g. a hose or a pipe, which is not illustrated in the figure. The water supplied through the upper opening 112 is supplied to the nozzle branch pipe 10 through a flow passage 114. A backflow pipe 20 is disposed in a branch area of the pipe body 110 so as to reverse the flow of water flowing through the upper opening 112 and supply the water to the nozzle branch pipe. Here, a lower end of the backflow pipe 20 is preferably rounded. This allows for an increased contact area between the lower end of the backflow pipe 20 and a pad 120, thereby improving the sealing effect between the pad 120 and the backflow pipe 20.

In the meantime, the auto-switching function of the invention is implemented by the pad 120, a biasing unit 130, a spring 140, and a pipe body cap 150, which are disposed in order in the lower portion of the branch area 116 in the pipe body 110.

Specifically, the pad 120 is provided at the lower portion of the branch area 116. This pad 120 is formed of a flexible material, e.g. a silicone material, and has a circular shape (or a circular disk) that conforms to the cross section of the pipe body 110. Under the pad 120, the biasing unit 130 is disposed above the pipe body cap 150 at a lower opening 118 (FIG. 4) of the pipe body 110 in such a manner as to be elastically supported by the spring 140 so as to be biased toward the pad 120.

The biasing unit 130 is provided with a positioning pin 132 around which the spring 140 is inserted. The positioning pin 132 is inserted into a through-hole 152 of the pipe body cap150, serving to prevent the biasing unit 130 from being biased laterally when moved up and down. For reference, the through-hole 152 of the pipe body cap 150 also serves to allow for a smooth opening/closing operation of the pad 120. Thus, the diameter of the positioning pin 132 has to be smaller than that of the through-hole 152.

The spring 140 of the invention is preferably a spring, e.g. a spring mounted in a bail-point pen, that both upper and lower ends thereof are flat. If not, when the spring is being compressed and restored, a spring force is not uniformly distributed over the biasing unit 130, resulting in deflection of the biasing unit 130. In this case, a gap may occur between the pad 120 and the lower portion of the branch area 116, which prevents the shutoff of the supply of water flowing through the upper opening 112 from being performed smoothly.

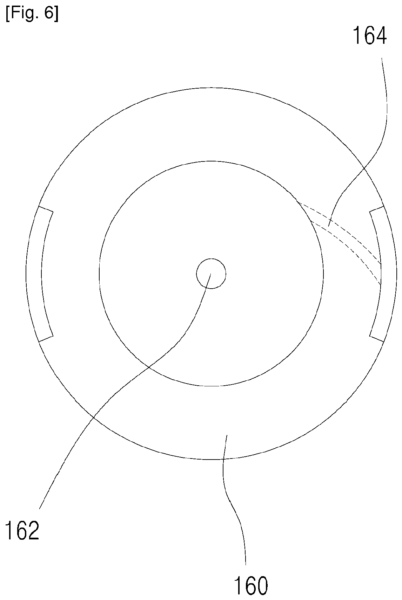

A nozzle cap 160 is provided around a leading end of the nozzle branch pipe 10. Here, a rubber-like O-ring R may be interposed therebetween. The nozzle cap 160 is provided with an injection port 162. As shown in FIG. 6, a groove 164 with a certain curvature for changing direction of water supplied is provided on an inner surface of the nozzle cap 160 so that it extends to the injection port 162. The water being supplied to the nozzle branch pipe 10 is injected out of the injection port 162 while having a turning force during flowing through the groove 164. With the water being turned forcedly, the water is easily atomized and then efficiently sprayed out of the injection port 162.

Referring again to FIG. 5, a turnabout 170 may be provided between the nozzle cap 160 and the leading end of the nozzle branch pipe 10. The turnabout 170 serves to change the direction of the supplied water perpendicular to the nozzle branch pipe 10. The turned water is received in a space S between the nozzle cap 160 and the turnabout 170. If supplied water is turned and stored in the space S before it is introduced into the groove 164 of the nozzle cap 160, even when the supply of water is halted, water leakage through the injection port 162 can be effectively prevented.

The opening or closing operation of the spraying apparatus 100 as constructed as such will now be described.

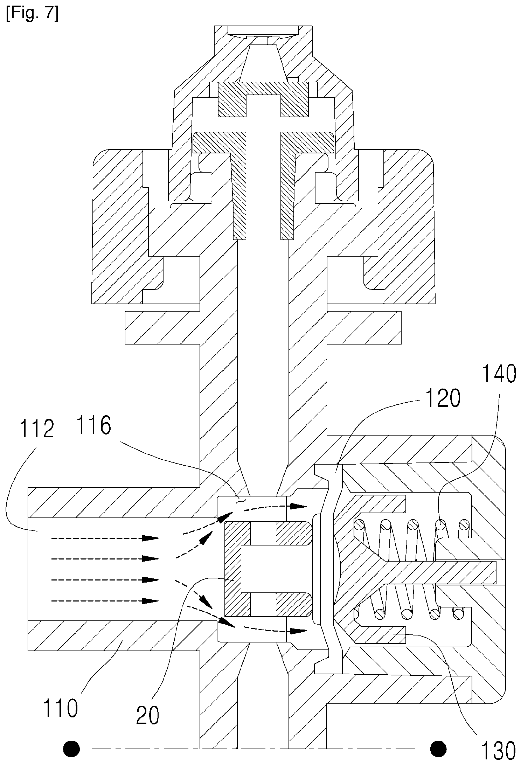

FIG. 7 shows an initial state of the spraying apparatus through which water is not yet supplied. Since water is not supplied from the upper opening 112 of the pipe body 110, the pad 120 is in the state of being biased by the biasing unit 130, thereby shutting off the branch area 116 including the backflow pipe 20. Thus, as shown by a dotted arrow, a water way is shut off.

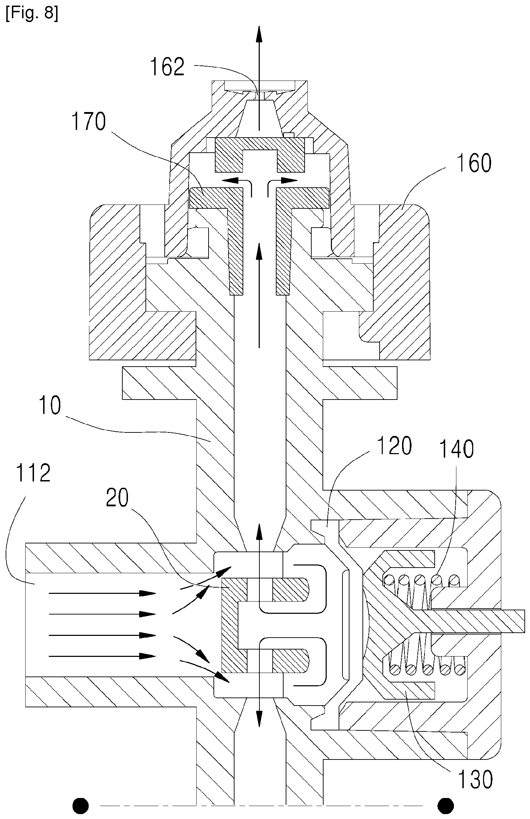

In the meantime, when water is supplied through the upper opening 112 as shown in FIG. 8, the pad 120 and the biasing unit 130 fall down due to water pressure, so that the water is introduced into the backflow pipe 20. The water introduced into the backflow pipe 20 is sprayed out of the injection port 162 of the nozzle cap 160 via the nozzle branch pipe 10 (see the solid-line arrow).

In this state, when the supply of water is halted, water pressure drops and then the biasing unit 130 biases the pad 120 toward the upper opening 112 by the action of elastic restoring force of the spring 140. Accordingly, as shown in FIG. 7, the lower portion of the branch area 116 is shut off by the pad 120.

Although the embodiments of the present invention have been disclosed for illustrative purposes, those skilled in the art will appreciate that various modifications, additions and substitutions are possible, without departing from the scope of the invention as disclosed in the accompanying claims.

### [Industrial Applicability]

The auto-switching spraying apparatus according to the present invention is widely applicable to a variety of irrigation facilities for crops.

## Claims

1. An auto-switching spraying apparatus (100), comprising:
a pipe body (110) including at least one nozzle branch pipe (10) and a backflow pipe (20) for reversing the flow of water flowing through an upper opening (112) into a branch area (116) and supplying the water to the nozzle branch pipe (10);
a pad (120) disposed at the lower portion of the branch area (116); and
a biasing unit (130),
wherein the biasing unit (130) is elastically supported by a spring (140) from a pipe body cap 150, between the pad (120) and the pipe body cap (150) coupled to a lower opening of the pipe body (110) to bias the pad (120) toward the upper opening (112),
wherein the biasing unit (130) has a positioning pin (132) around which the spring (140) is inserted, the positioning pin (132) being inserted into a through-hole (152) of the pipe body cap (150).

2. The auto-switching spraying apparatus (100) according to claim 1, wherein the pad (120) and the biasing unit (130) fall down toward the lower opening due to hydraulic pressure, so that a flow passage (114) for the nozzle branch pipe (10) is opened.

3. The auto-switching spraying apparatus (100) according to claim 1, wherein a lower end portion of the backflow pipe (20) has a rounded shape.

4. The auto-switching spraying apparatus (100) according to claim 1, further comprising a nozzle cap (160) coupled to a leading end of the nozzle branch pipe (10), the nozzle cap (160) having an injection port (162).

5. The auto-switching spraying apparatus (100) according to claim 4, further comprising a turnabout (170) provided between the nozzle cap (160) and the leading end of the nozzle branch pipe (10) to change the direction of water supplied perpendicular to the nozzle branch pipe (10).

6. The auto-switching spraying apparatus (100) according to claim 4 or 5, wherein the nozzle cap (160) is provided on its inner surface with a groove extending to the injection port (162), the groove having a certain curvature allowing for turning of water supplied.

7. The auto-switching spraying apparatus (100) according to claim 1, wherein the pad (120) is formed of a silicone material.

## Patentansprüche

1. Selbstumschaltende Sprühvorrichtung (100), umfassend:
einen Rohrkörper (110), einschließend mindestens ein Düsenabzweigrohr (10) und ein Rückflussrohr (20) zum Umkehren des Wasserstroms, der durch eine obere Öffnung (112) in einen Abzweigbereich (116) strömt, und zum Zuführen des Wassers zu dem Düsenabzweigrohr (10);
eine Unterlage (120), die an dem unteren Abschnitt des Abzweigbereichs (116) angeordnet ist; und
eine Vorspanneinheit (130),
wobei die Vorspanneinheit (130) durch eine Feder (140) von einer Kappe (150) des Rohrkörpers zwischen der Unterlage (120) und der Kappe (150) des Rohrkörpers, die mit einer unteren Öffnung des Rohrkörpers (110) gekoppelt ist, elastisch gestützt wird, um die Unterlage (120) in Richtung der oberen Öffnung (112) vorzuspannen,
wobei die Vorspanneinheit (130) einen Positionierstift (132) aufweist, um den herum die Feder (140) eingesetzt ist,
wobei der Positionierstift (132) in eine Durchgangsbohrung (152) der Kappe (150) des Rohrkörpers eingesetzt ist.

2. Selbstumschaltende Sprühvorrichtung (100) nach Anspruch 1, wobei die Unterlage (120) und die Vorspanneinheit (130) aufgrund von Hydraulikdruck nach unten zu der unteren Öffnung fallen, sodass ein Strömungsweg (114) für das Düsenabzweigrohr (10) geöffnet wird.

3. Selbstumschaltende Sprühvorrichtung (100) nach Anspruch 1, wobei ein unterer Endabschnitt des Rückflussrohrs (20) eine abgerundete Form aufweist.

4. Selbstumschaltende Sprühvorrichtung (100) nach Anspruch 1, ferner umfassend eine Düsenkappe (160), die mit einem vorderen Ende des Düsenabzweigrohrs (10) gekoppelt ist, wobei die Düsenkappe (160) eine Einspritzöffnung (162) aufweist.

5. Selbstumschaltende Sprühvorrichtung (100) nach Anspruch 4, ferner umfassend eine Umleitungseinheit (170), die zwischen der Düsenkappe (160) und dem vorderen Ende des Düsenabzweigrohrs (10) bereitgestellt ist, um die Richtung des senkrecht zu dem Düsenabzweigrohr (10) zugeführten Wassers zu ändern.

6. Selbstumschaltende Sprühvorrichtung (100) nach Anspruch 4 oder 5, wobei die Düsenkappe (160) an ihrer Innenfläche mit einer Nut bereitgestellt ist, die sich zu der Einspritzöffnung (162) erstreckt, wobei die Nut eine bestimmte Krümmung aufweist, die ein Umlenken des zugeführten Wassers ermöglicht.

7. Selbstumschaltende Sprühvorrichtung (100) nach Anspruch 1, wobei die Unterlage (120) aus einem Silikonwerkstoff ausgebildet ist.

## Revendications

1. Appareil de pulvérisation à commutation automatique (100) comprenant :
un corps de conduite (110) comportant au moins une conduite de dérivation de buse (10) et une conduite de refoulement (20) pour inverser le débit d'eau s'écoulant à travers une ouverture supérieure (112) dans une zone de dérivation (116) et pour fournir l'eau à la conduite de dérivation de buse (10) ;
un segment (120) disposé à la partie inférieure de la zone de dérivation (116) ; et
une unité de précontrainte (130),
dans lequel l'unité de précontrainte (130) est supportée élastiquement par un ressort (140) à partir d'un capot de corps de conduite (150), entre le segment (120) et le capot de corps de conduite (150) couplé à une ouverture inférieure du corps de conduite (110) pour précontraindre le segment (120) vers l'ouverture supérieure (112),
dans lequel l'unité de précontrainte (130) a une broche de positionnement (132) autour de laquelle le ressort (140) est inséré,
la broche de positionnement (132) étant insérée dans un orifice traversant (152) du capot de corps de conduite (150).

2. Appareil de pulvérisation à commutation automatique (100) selon la revendication 1, dans lequel le segment (120) et l'unité de précontrainte (130) tombent vers l'ouverture inférieure en raison de la pression hydraulique, de sorte qu'un passage d'écoulement (114) pour la conduite de dérivation de buse (10) est ouvert.

3. Appareil de pulvérisation à commutation automatique (100) selon la revendication 1, dans lequel une portion d'extrémité inférieure de la conduite de refoulement (20) a une forme arrondie.

4. Appareil de pulvérisation à commutation automatique (100) selon la revendication 1, comprenant en outre un capot de buse (160) couplé à une extrémité avant de la conduite de dérivation de buse (10), le capot de buse (160) ayant un port d'injection (162).

5. Appareil de pulvérisation à commutation automatique (100) selon la revendication 4, comprenant en outre un tournant (170) prévu entre le capot de buse (160) et l'extrémité avant de la conduite de dérivation de buse (10) pour changer la direction de l'eau fournie perpendiculairement à la conduite de dérivation de buse (10).

6. Appareil de pulvérisation à commutation automatique (100) selon la revendication 4 ou 5, dans lequel le capot de buse (160) est pourvu sur sa surface interne d'une rainure s'étendant jusqu'au port d'injection (162), la rainure ayant une certaine courbure permettant de tourner l'eau fournie.

7. Appareil de pulvérisation à commutation automatique (100) selon la revendication 1, dans lequel le segment (120) est formé à partir d'un matériau silicone.
